# EUROPEAN PATENT APPLICATION

(11) **EP 4 610 151 A1**
(43) Date of publication of application: **03.09.2025**
(21) Application number: 24160296.0
(22) Date of filing: 28.02.2024
(51) Int. Cl.: B62D 57/024

(54) **SELF PROPELLED VEHICLE FOR METAL FERROMAGNETIC WALLS**

(71) Applicant: Windtools, S.L.U., 31230 Viana (ES)
(72) Inventor: CARRANZA ARCE, Eduardo, 31230 Viana (ES)
(74) Representative: Isern Patentes y Marcas S.L.

(57) **Abstract**

The present invention comprises: a base, with two side portions (3) articulated to a central portion (2); in each side portion (5), a train (5) with interconnected wheels (6) equipped with a magnet (14); suspension to regulate the height of some of the wheels (3); gearmotors (12) to drive the trains (5); and rechargeable batteries. It may further comprise a cleaning device with: a cloth (18) wound on a mandrel (19); a motorised axle (24) to collect the cloth (18); and a cleaning head (23) to guide the cloth (18) from the mandrel (19) to the motorised axle (24), and comprising a pivoting hold-down (27) and pressure springs (28) to press the cloth (18) against the wall (1). The vehicle has great manoeuvrability and adhesion, and allows for optimised cleaning of ferromagnetic metal walls (1).

## Description

### Technical field of the invention

The present invention relates, more generally, to a self-propelled vehicle configured to be moved across a ferromagnetic metal wall.

### Background of the invention

Wind turbines use oils and greases that, occasionally, or due to breakdowns, cause spills and run off on the surface of the tower, also called "mast", of said wind turbines. Cleaning this surface is a very complex task, which is normally carried out by a group of specialised personnel, using a large number of tools, such as: cranes, elevators, pressure and pumping equipment, water tanks, etc. All this entails very high costs and several days of work. These tasks also force the wind turbine to stop, which increases costs due to lack of production.

Moreover, cleaning causes environmental damage, due to contamination of the environment, due to the waste washed and the amount of water used in cleaning, which is difficult to collect and ends up filtering into the ground, dragging hydrocarbons and other chemical substances.

Safety is another important factor, because personnel are working at heights above 50 metres, which implies increasing safety measures, and there is always a certain risk of accident.

There are semi-automatic devices capable of climbing the wind turbine tower, and which are connected to a control post. Typically, these devices use pressurised water nozzles, which remains a problem for contamination purposes. Furthermore, they can reach a limited height, due to the enormous burden caused by the electrical and hydraulic connections to the control at the base.

Therefore, the need arises to have a cleaning device equipped with the greatest possible number of the following capabilities (preferably all of them):
- Ability to reach the total height of the tower of the tallest wind turbines.
- Ability to move both vertically and horizontally.
- Manoeuvring ability to make movements on the surface of the wind turbine tower, either to avoid obstacles or to carry out cleaning trajectories.

- Ability to pass over (tread on) welds between segments of the tower, vertically and horizontally.
- Ability to use a reduced amount of water without product run-off.
- Ability to be operated by a single person.
- Ability to operate even with the wind turbine running.
- Ability to be used for alternative tasks to cleaning.

### Description of the invention

The object of the invention relates to a self-propelled vehicle for ferromagnetic metal walls, according to the independent claim, which is designed to overcome the aforementioned drawbacks through the mentioned abilities. The dependent claims describe optional advantageous features of the vehicle of the invention.

According to a particular exemplary embodiment, the vehicle is configured to be moved across a curved wall, such as a metal wall of a wind turbine tower. According to a preferred exemplary embodiment, the vehicle can be configured for cleaning tasks of said wall, as described below.

### Brief description of the figures

As a complement to the description provided herein, and for the purpose of helping to make the features of the invention more readily understandable, in accordance with a preferred practical exemplary embodiment thereof, said description is accompanied by a set of drawings constituting an integral part of the same, wherein by way of illustration and not limitation, the following has been represented:
Figure 1 shows the configuration of the articulated frame.

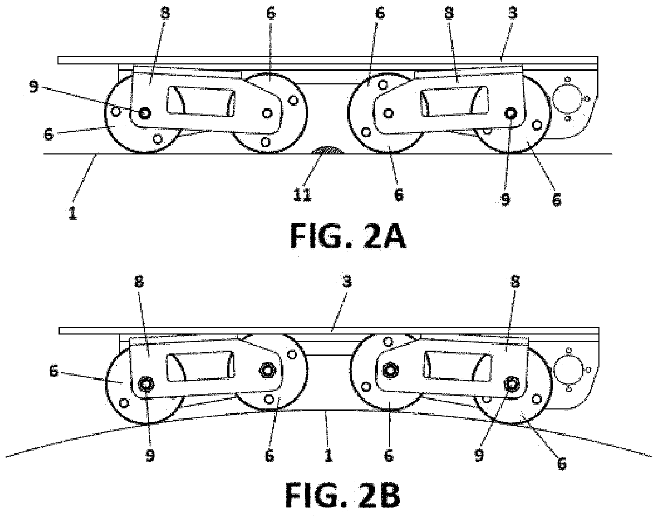

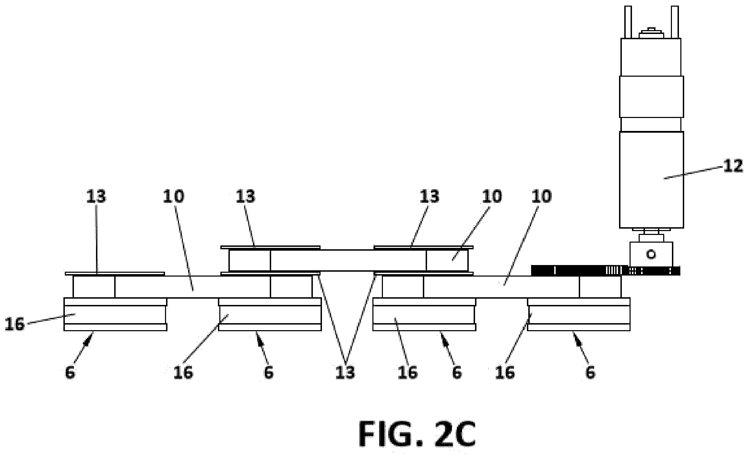

Figures 2A-2C show the configuration of the train of wheels to adapt to an obstacle (figure 2A) and to a curved surface (figure 2B), and the connections between wheels (figure 2C).

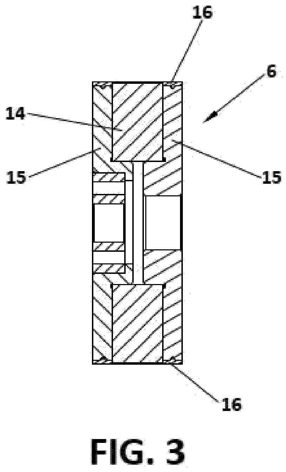

Figure 3 shows a cross section of a motion wheel.

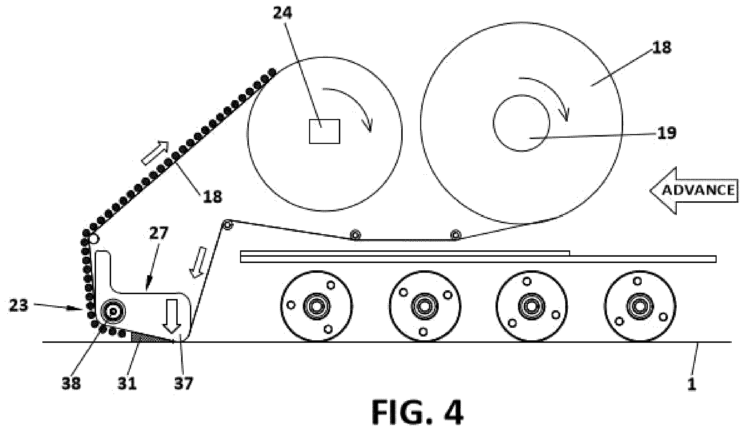

Figure 4 shows the path of the cloth and winding states.

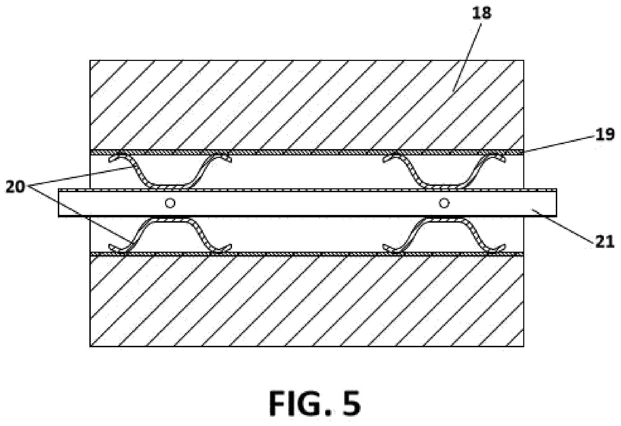

Figure 5 shows a detail of the clean roll axle, and the housing for the clean cloth, where the brakes can also be seen.

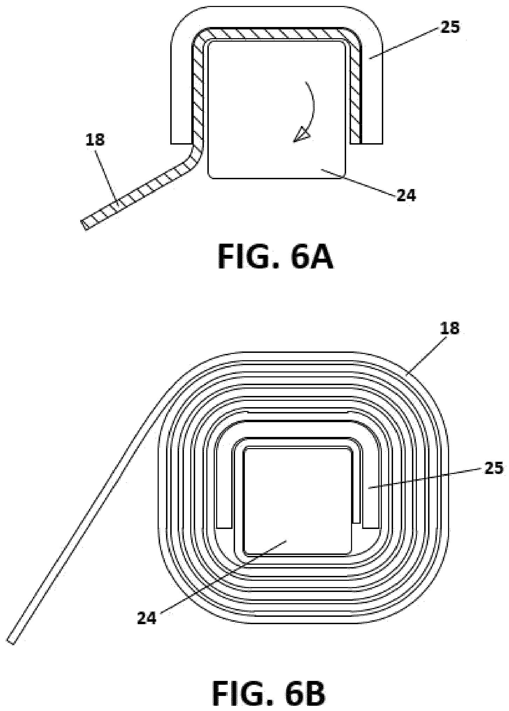

Figures 6A-6C show a detail of the motorised axle, the fixing of the cloth and the supports.
Figure 7 shows a detailed view that illustrates the head and the anchoring positions.

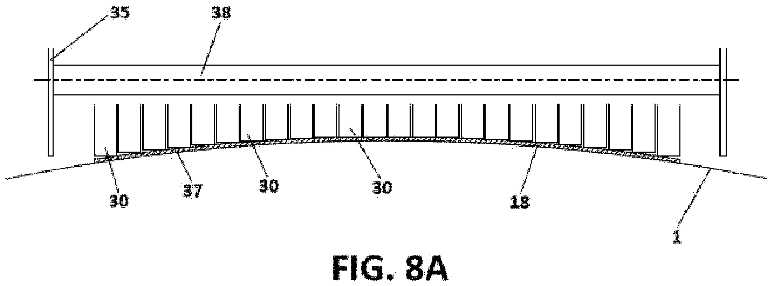

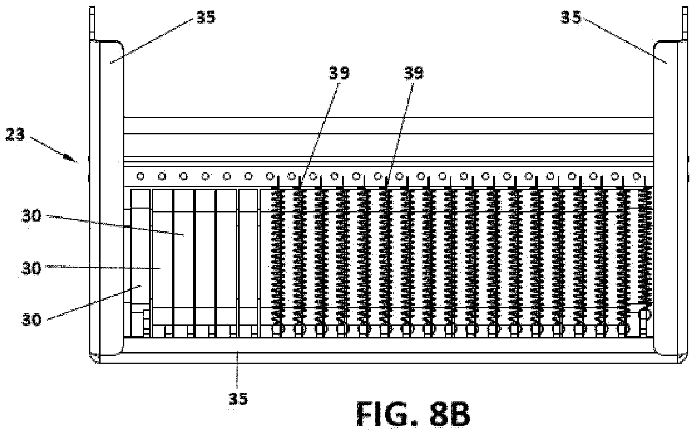

Figures 8A-8B show front view (figure 8A) and side view (figure 8B) of the head.

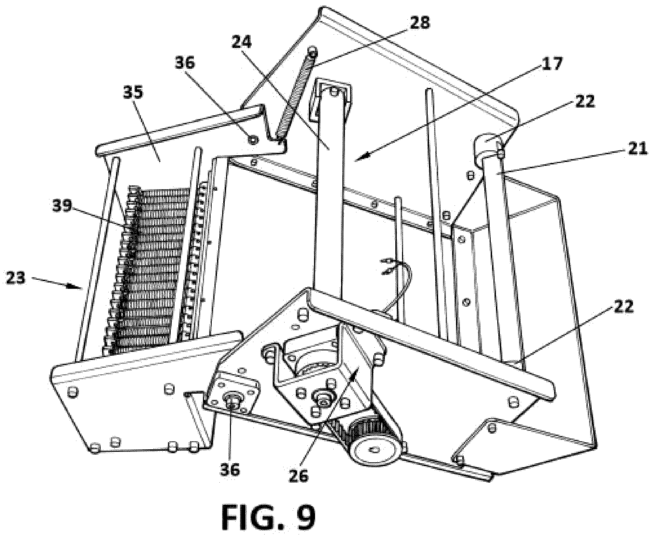

Figure 9 shows a schematic perspective view of the vehicle of the invention with the cleaning head.

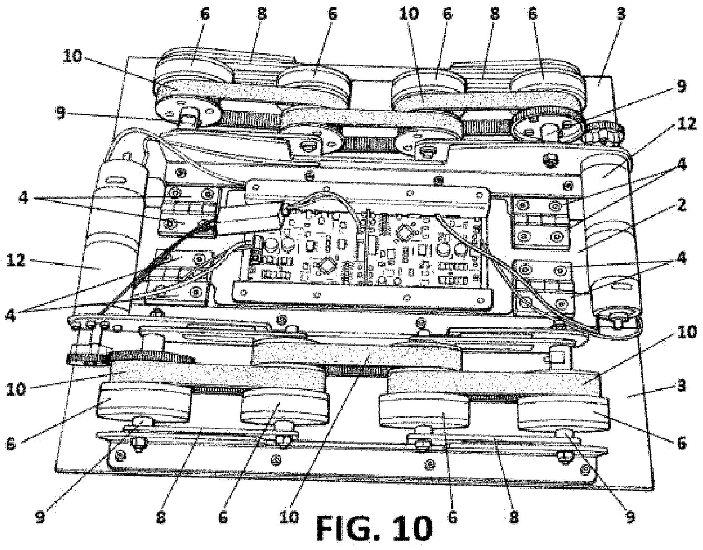

Figure 10 shows a top view of the articulated frame with the trains of wheels.

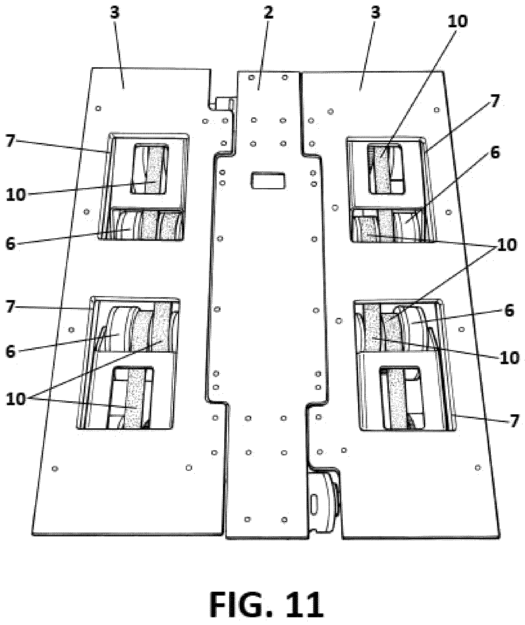

Figure 11 shows a bottom view of the articulated frame.

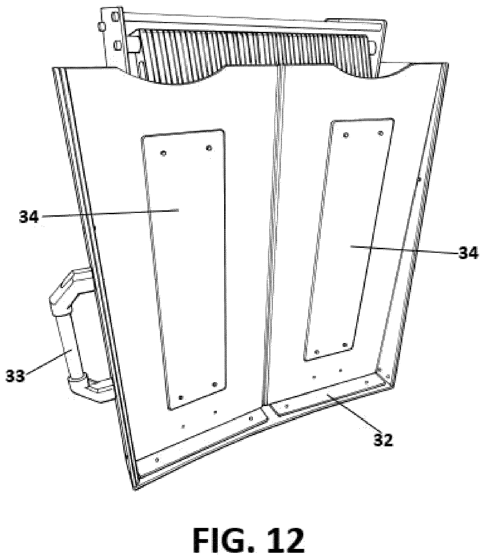

Figure 12 shows a view in which the accessory can be seen.

### List of references

- 1: Wall
- 2: Central portion
- 3: Side portions
- 4: Hinges
- 5: Train
- 6: Wheels
- 7: Holes
- 8: Swingarms
- 9: Tilt axis
- 10: Belts
- 11: Obstacles
- 12: Gearmotor
- 13: Pulleys
- 14: Magnet
- 15: Plates
- 16: Adhesive coating
- 17: Housing
- 18: Cleaning element / Cloth
- 19: Mandrel
- 20: Brakes
- 21: Clean roll axle
- 22: Supports
- 23: Cleaning head
- 24: Motorised axle
- 25: Clamps
- 26: Motor
- 27: Hold-down
- 28: First pressure means / First pressure springs
- 29: Anchoring positions
- 30: Segments
- 31: Dirt
- 32: Fitting
- 33: Handles
- 34: Metal plates
- 35: Support
- 36: Support axle
- 37: Hold-down area
- 38: Hold-down axle
- 39: Second pressure means / Second pressure springs

### Detailed description of a preferred embodiment of the invention

With the help of the aforementioned figures, a detailed description of an exemplary preferred embodiment of the self-propelled vehicle for ferromagnetic metal walls (1), object of the present invention, is provided below. The example described focusses, more specifically, although without loss of generality, on a vehicle for cleaning a metal wall (1) of a wind turbine tower.

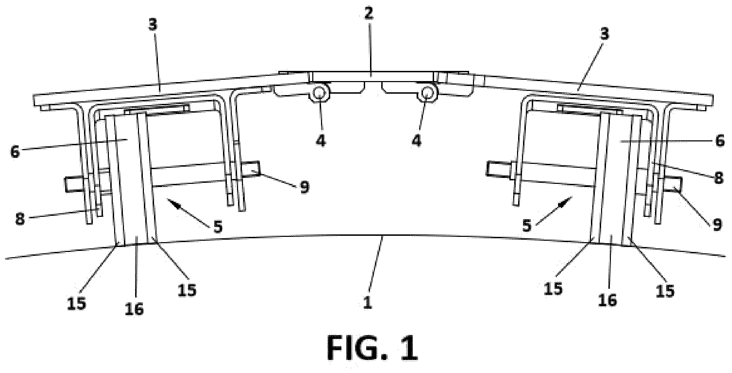

The vehicle has a base including an articulated frame. The frame has a central portion (2) and two side portions (3) articulated with the central portion (2), for example by means of hinges (4). A train (5) of motion wheels (6) is mounted on each of the side portions (3). This configuration allows the wheels (6) of each train (5) to make normal contact to the surface of the metal wall (1), in this case, that of a wind turbine tower, adapting to variable curvatures of the wall (1), either convex, see figure 1, as is the case of the wind turbine tower, as well as flat or concave, not represented. It also allows each train (5) to be operated at different speeds, with respect to that of the other train (5), which provides manoeuvrability.

The base can be a plate, wherein the portions (2, 3) are articulated plates, and which has holes (7), in the side portions (3), from which the wheels (6) partially protrude.

There is suspension for the wheels (6), which allows adjusting the height of at least some of the wheels (6) with respect to the base. As a particular example of suspension, for each train (5) of wheels (6), there are at least two swingarms (8), each linked to two of the wheels (6). During horizontal movement, this configuration allows adapting the four wheels (6) of each train (5) to the curvature of the wall (1). In each swingarm (8), the axle of one of the wheels serves as the tilting axis (9) for the swingarm (8), so the wheel (6) of the tilting axis (9) is called "fixed wheel", while the other wheel (6) of the same swingarm (8) is called "moving wheel". When the swingarm (8) pivots with respect to one of the wheels (6), specifically, with respect to the fixed wheel (6), the relative distance between both wheels (6) of the same swingarm (8) is maintained, so that it is possible to use both belts (10) and gears (not shown) to keep the wheels (6) coupled. However, a slight variation occurs between the axles of the central wheels (6), that is, of adjacent wheels (6) of different swingarms (8), unless said central wheels (6) are fixed wheels, which makes it difficult to connect the wheels (6) using gears, but with belts (10) it is possible, even without tensioner, as has been verified.

The four wheels (6) of each train (5) can be arranged in various ways, for example: the end wheels (6) of each train (8), that is, the wheels (6) of different swingarms (8) which, unlike the central wheels (6), are not adjacent, can be fixed wheels (6), the central wheels (6) being mobile wheels (6); the end wheels (6) are mobile wheels (6) and the central wheels (6) are fixed wheels (6); or the central wheels (6) are one fixed wheel (6) and one mobile wheel (6), and the end wheels (6) are also one fixed wheel (6) and one mobile wheel (6). The first of the aforementioned arrangements is considered preferential, since it presents greater stability when passing over obstacles (11) and facilitates the connection with a gearmotor (12), which drives the wheels (6), see below, as it has a fixed wheel (6) at one end.

According to a preferred exemplary embodiment, the wheels (6) are connected to one another, for example, through belts (10), or sprockets (not shown), as indicated above, to maintain connection and drive continuity. To do this, the wheels (6) further incorporate pulleys (13). This allows the wheels (6) to rotate in the same direction and for all the wheels (6) to provide traction and, therefore, adhesion to the wall (1). In particular, in the case of swingarms (8), the belts (10) join to one another the pair of wheels (6) of each swingarm (8), as well as the central wheels (6) of the two swingarms (8) from the same train (5). The tilting of the wheels (6) also allows passing over obstacles (11), such as surface irregularities orweld seams, without losing contact with the wall (1).

As previously anticipated, each train (5) is driven by a gearmotor (12), preferably irreversible. Each gearmotor (12) drives one of the wheels (6) of each train (5), called the "driven wheel". Each gearmotor (12) has a wireless receiver (not shown) to adjust speed and direction of rotation. Rechargeable batteries (not shown) are included to power the gearmotors (12) and, in general, any electrical element of the vehicle, allowing quick replacement for continuous use of the vehicle.

Each wheel (6) includes a central magnet (14) and, preferably, two metal plates (15), such as steel, on the sides to concentrate field lines and increase adhesion. To avoid damaging the wall (1) and also to increase adhesion, either the plates (15), or the assembly made of plates (15) plus magnet (14), are coated with a semi-rigid rubber-type adhesive coating (16).

The interconnection of the wheels (6) guarantees traction on all wheels (6), not only on the two wheels (6) driven by the gearmotors (12), which, on the one hand, cooperates with the magnets (14) in supporting the weight of the vehicle in traction and, in addition, prevents skidding in the event of passing over obstacles (11) or through areas stained with dirt (31), such as grease, where one of the wheels (6) may lose contact with the surface of the wall (1).

The vehicle is preferably intended to be operated (in terms of course, speed, etc.) remotely by an operator, through a wireless communications system. For this purpose, the base of the vehicle may include one or more cameras (not shown), as well as, where appropriate, sensors (not shown), which send a signal to a device from which the operator can steer the vehicle. Alternatively, the vehicle can include an autonomous control with programmed actions and trajectories, as well as sensors to, for example, avoid collisions and correct deviations.

For example, the dirt (31), in the particular case of the walls (1) of wind turbines, can be of various types and be distributed across different areas. In the upper area it is common to find grease that comes from the bearings of the wind turbine nacelle; vertical run-offs are also frequent that run along almost the entire wall (1) of the wind turbine tower. In this case, the remains are lighter oil that comes from the reducer. Each case requires a cleaning strategy, adapting the trajectory, cloth pressure exerted, cloth deployment speed, cleaner concentration, number of passes, etc.

With these parameters, it is possible to configure the vehicle, in particular if it is a cleaning vehicle as will be described below, so that it performs cleaning autonomously, and also assisted by sensors and cameras with artificial vision that determine the level of dirt in the wall (1) to validate the cleaning. It is also possible to transmit signals from cameras and sensors to an operator who steers the vehicle and validates the cleaning result.

For example, the vehicle may have cameras and sensors that make it operate autonomously. These sensors measure the degree of dirt, avoid collisions, correct deviations and determine the optimal trajectory and movement conditions.

The vehicle that has just been described allows travelling along a ferromagnetic metal wall (1) in different directions and ways, as well as according to various trajectories, with great capacity for adhesion and manoeuvrability. Therefore, the vehicle described can be used to perform very varied tasks on ferromagnetic metal walls (1), by installing a corresponding functional device. For example, inspection devices can be included such as cameras, to check the condition of components of a wind turbine, or ultrasound units, to verify welds, cracks, etc.

Next, a more preferred exemplary embodiment is described, in which the vehicle is a cleaning vehicle, suitable for cleaning the ferromagnetic metal wall (1), such as that which belongs to a wind turbine tower. For this purpose, the vehicle includes a cleaning device, as described below.

The cleaning device is mounted on the base, and comprises a housing (17) in which a cleaning element (18) is housed, such as a cloth (18) impregnated with cleaning product. For greater effectiveness, the cleaning product is preferably maintained at a temperature above a predefined threshold temperature.

The cloth (18) is mounted in a roll on a mandrel (19); to prevent it from running off, and maintain temperature, the cloth (18), the mandrel (19) and the cleaning product are kept inside a compartment (not shown) that isolates the cloth (18) from the outside. Inside the mandrel (19), brakes (20) are provided that offer a certain frictional resistance to the free rotation of the mandrel (19), to unroll the cloth (18) in a controlled manner. According to a preferred embodiment, the brakes (20) are mounted on a clean roll axle (21) releasably housed inside the mandrel (20). The mandrel (19) is supported on supports (22).

The cloth (18) performs a path passing through a cleaning head (23). The cloth (18) has a free end that is attached to a motorised dirty roll axle (24), on which the cloth (18) is rolled after having cleaned the surface. The clean cloth (18) is initially rolled on the mandrel (19) and performs a guided path passing through the cleaning head (23), which presses the cloth (18) against the surface of the wall (1).

The motorised axle (24) has a clamp (25) to, as indicated before, attach the free end of the cloth (18) to said motorised axle (24), allowing the cloth (18) to be pulled. On both sides it has anchors for attaching same on supports. The motorised axle (24) is coupled to a motor (26), making it possible to remotely vary the rotation speed of the motor (26), to adjust the amount of cloth (18) consumed depending on the dirt on the surface of the wall (1).

The cleaning head (23) is responsible for pressing the cloth (18) on the wall (1) for greater cleaning efficiency. The cleaning head (23) is placed in front of the trains (5) of wheels (6), in general, in front of the base, as well as it preferably has a width greater than that of the base, so that the wheels (6) circulate on an already clean surface, which reduces the chances of slipping.

The cleaning head (23) includes: a support (35), which is pivotable about a support axle (36); and a hold-down (27), which comprises a hold-down area (37) intended to press the cloth (18) against the surface of the wall (1) by pivoting the support (35), maintaining contact of the cloth (18) with the wall (1), although the distance to the surface of the wall (1) varies; and first pressure means (28), to force the pivoting of the support (35). The first pressure means (28) can be configured to vary the pressure exerted.

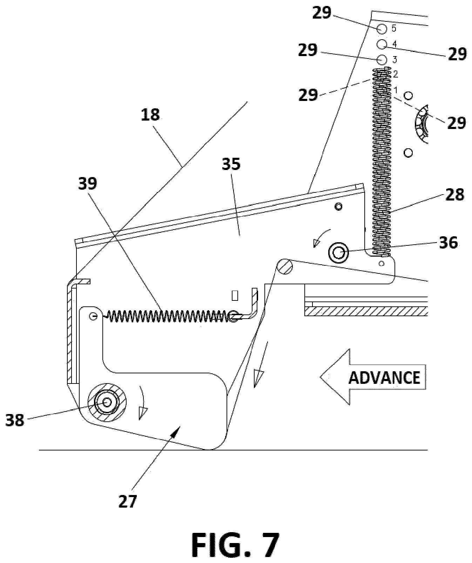

The first pressure means (28) can be first pressure springs (28) which preferably have an adjustable end, which can be anchored in different anchoring positions (29), to vary the pressure exerted. Figure 7 shows that, if the end is anchored in a higher anchoring position (29), the first pressure springs (28) are more tensioned and, therefore, force the pivoting of the support (35) about the support axle (36), which causes greater pressure exerted against the wall (1) by the hold-down area (37).

Moreover, the cleaning head (23) is preferably capable of adapting to different transversal curvatures of the wall (1) while maintaining pressure across the entire width of the cloth (18). For this purpose, the hold-down (27) is pivotable with respect to the support (35) about a hold-down axle (38), as well as the head (23) additionally includes second pressure means (39), which connect the hold-down (27) with the head (23) and that force the pivoting of the hold-down (27) to prevent the hold-down area (37) from losing contact with the cloth (18). Preferably, additionally, the hold-down (27) can be discontinuous, comprising independent segments (30), each with second pressure means (39). The second pressure means (39) can also be second pressure springs (39). The cloth (18) rubs the surface, leaving the dirt (31) in front of the segments (30) and advancing in the direction of travel to be collected in the motorised axle (24).

For placing and removing the vehicle on the wall (1), there is an accessory (32) that also serves to transport the vehicle. The accessory (32), arranged in a horizontal position, allows the vehicle to be transported, while, when it is vertically arranged, it allows the vehicle to be installed on, and removed from, the wall (1). In a vertical position, the accessory (32) allows continuity in the rolling of the vehicle. For comfort, it is made of lightweight material, and incorporates two carrying handles (33). To keep the accessory fixed to the metal wall (1), the accessory (32) has a base that includes ferromagnetic metal plates (34) to which the magnets (14) of the wheels (5) adhere, preventing overturning or unwanted movements.

## Claims

1. A self-propelled vehicle for ferromagnetic metal walls (1), **characterised in that** it comprises:
- a base, with an articulated frame, which includes a central portion (2) and two side portions (3) articulated with the central portion (2);
- two trains (5) of motion wheels (6), each train (5) mounted on one of the side portions (3), all the wheels (5) of each train (5) being interconnected, and each wheel (6) comprising a magnet (14) to attract the wall (1);
- suspension to regulate height, with respect to the base, of at least some of the wheels (3);
- gearmotors (12) to drive each of the trains (5);
- rechargeable batteries to power the gearmotors (12).

2. The vehicle according to claim 1, wherein the side portions (3) comprise holes (7) from which the wheels (6) partially protrude.

3. The vehicle according to any of claims 1-2, wherein the base comprises a plate, the portions (2, 3) being articulated plates.

4. The vehicle according to any of claims 1-3, wherein the suspension comprises at least two swingarms (8) for each train (5), each swingarm (8) linked to two of the wheels (6) where each swingarm (8) is pivotable with respect to an axle of one of the wheels (6).

5. The vehicle according to any of claims 1-4, wherein the wheels (6) of each train (5) are connected by means of belts (10) that run between pulleys (13) mounted on the wheels (6).

6. The vehicle according to claims 4 and 5 simultaneously, wherein the belts (10) join the pair of wheels (6) of each swingarm (8), as well as the wheels (6) of swingarms (8) of the same train (5) to each another.

7. The vehicle according to any of claims 1-6, which additionally includes a cleaning device mounted on the base.

8. The vehicle according to claim 7, wherein the cleaning device comprises:
- a cleaning cloth (18) wound on a mandrel (19);
- a motorised axle (24) attached to a free end of the cloth (18) to collect the cloth (18) once used; and
- a cleaning head (23) to guide the cloth (18) from the mandrel (19) to the motorised axle (24), and comprising:
- a support (35), which is pivotable about a support axle (36);
- a hold-down (27), which comprises a hold-down area (37) for pressing the cloth (18) against the surface of the wall (1) by pivoting the support (35); and
- first pressure means (28), preferably first pressure springs (28), intended to force the support (35) to pivot, in order to press the cloth (18) against the wall (1).

9. The vehicle according to claim 8, wherein the first pressure means (28) are configured to vary the pressure exerted.

10. The vehicle according to claims 8 and 9 simultaneously, wherein the first pressure means (28) are first pressure springs (28), and which additionally includes several anchoring positions (29) where ends of the first pressure springs (28) are anchorable, in order to vary the pressure exerted.

11. The vehicle according to any of claims 8-10, wherein the hold-down (27) is pivotable with respect to the support (35) about a hold-down axle (38), as well as the head (23) additionally includes second pressure means (39), which connect the hold-down (27) with the head (23) and which force the pivoting of the hold-down (27) to prevent the hold-down area (37) from losing contact with the cloth (18), adapting the head (23) to different transversal curvatures of the wall (1), and maintaining the pressure across the entire width of the panel (18).

12. The vehicle according to claim 11, wherein the hold-down (27) is discontinuous, comprising independent segments (30), each with second pressure means (39), which are preferably second pressure springs (39).

13. The vehicle according to any of claims 9-12, wherein the cleaning head (23) is placed in front of the base, in particular in front of the trains (5) of wheels (6), as well as preferably having a width greater than that of the base.

14. An assembly **characterised in that** it comprises:
- the vehicle according to any of claims 1-13; and
- an accessory (32), to place and remove the vehicle from the wall (1); and comprising a base with ferromagnetic metal plates (34) to which the magnets (14) of the wheels (5) adhere.

15. The assembly according to claim 14, wherein the accessory (32) further includes handles (33) for transportation.
